(19) **Europäisches Patentamt / European Patent Office / Office européen des brevets**

(11) **EP 2 984 786 B1**

(12) **FASCICULE DE BREVET EUROPEEN**

(45) Date de publication et mention de la délivrance du brevet:
**19.01.2022 Bulletin 2022/03**

(21) Numéro de dépôt: **14720671.8**

(22) Date de dépôt: **09.04.2014**

(51) Classification Internationale des Brevets (IPC):
**H04L 12/24** *(2006.01)* **H04L 12/54** *(2022.01)*

(52) Classification Coopérative des Brevets (CPC):
**H04L 41/142; H04L 65/4084; H04L 65/80; H04L 67/2838; H04L 67/327**

(86) Numéro de dépôt international:
**PCT/FR2014/050855**

(87) Numéro de publication internationale:
**WO 2014/167250 (16.10.2014 Gazette 2014/42)**

(54) **ARCHITECTURE CENTRALISÉE POUR L'ÉTABLISSEMENT DE FÉDÉRATIONS DE DISTRIBUTEURS DE CONTENUS**

**ZENTRALISIERTE ARCHITEKTUR ZUR HERSTELLUNG VON GRUPPEN VON INHALTSVERTEILERN**

**CENTRALIZED ARCHITECTURE FOR ESTABLISHING FEDERATIONS OF CONTENT DISTRIBUTORS**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2013 FR 1353215**

(43) Date de publication de la demande:
**17.02.2016 Bulletin 2016/07**

(73) Titulaire: **ORANGE**
**92130 Issy-les-Moulineaux (FR)**

(72) Inventeurs:
• **IBRAHIM, Ghida**
  **1072 ML Amsterdam (NL)**
• **KOFMAN, Daniel**
  **F-94160 Saint Mande (FR)**

(56) Documents cités:
**US-A1- 2012 215 779     US-B1- 8 117 276**

• **PETERSON L ET AL: "Framework for CDN Interconnection; draft-ietf-cdni-framework-03.txt", FRAMEWORK FOR CDN INTERCONNECTION; DRAFT-IETF-CDNI-FRAMEWORK-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 18 février 2013 (2013-02-18), pages 1-55, XP015090139,**

**Description**

La présente invention concerne le domaine de la fédération de distributeurs de contenus pour la livraison à des utilisateurs finaux de contenus numériques fournis par des fournisseurs de contenus.

Historiquement, la distribution de contenus numérique était basée sur un modèle impliquant quatre types d'acteurs dans la chaîne de valeur :

- Les fournisseurs de contenus (e.g. YouTube, Daily Motion, Netflix) mettant à disposition d'une large audience, directement ou indirectement, des contenus numériques ;
- Les distributeurs de contenus, ou CDN providers en anglais (e.g. Akamai), capables d'alléger la charge des fournisseurs de contenus et d'accélérer la livraison de leurs contenus ;
- Les opérateurs de réseaux, comme par exemple des acteurs de transit ou des opérateurs télécoms en charge de la boucle locale, qui permettent aux contenus d'être accessibles pour les utilisateurs finaux ;
- Les utilisateurs finaux qui consomment les contenus numériques.

L'explosion du trafic numérique provoque des problèmes de congestion, aussi bien au sein des domaines des opérateurs de réseaux qu'au niveau des interconnexions entre ces différents acteurs, entraînant une hausse des coûts d'interconnexion et une dégradation de la qualité de service dans le réseau. Cela oblige les fournisseurs de contenus et les acteurs CDNs à chercher un compromis entre une extension en interne de leurs plateformes de livraison de contenus et la délégation de cette livraison à de nouveaux acteurs, et donc à redéfinir leurs modèles économiques.

Pour ces raisons, l'écosystème de la distribution de contenu numérique est en train de passer d'un scénario avec un ou deux acteurs majeurs monopolisant la distribution et la livraison de contenus (e.g. un unique fournisseur de contenus associé à un unique réseau CDN global) à un scénario avec une fédération de multiples acteurs hétérogènes capable de répondre à la problématique susmentionnée d'explosion du trafic, ce dernier scénario étant conforté par l'émergence de nouveaux acteurs sur les marchés des réseaux CDNs et du cloud, ainsi que l'avancée des techniques de virtualisation et de partage de ressources.

La problématique de gestion dynamique de fédérations établies de distributeurs de contenus a été déjà adressée. Ainsi, le brevet US 8,117,276 propose un système centralisé de gestion de l'interopérabilité entre plateformes distribuées de serveurs au sein d'une même fédération.

Cependant, au niveau de l'établissement de ces fédérations proprement dit, c'est-à-dire du choix initial des distributeurs de contenu à associer, ainsi que des politiques de placement de contenu et de partage de charge, la décision d'établissement de ces fédérations est généralement prise soit par un fournisseur de contenus, soit par un CDN global désigné comme CDN « amont » (upstream CDN en anglais).

Dans le premier cas de figure, le fournisseur de contenus choisit deux ou plusieurs acteurs CDNs, disposant d'une grande capacité et une couverture globale, place tous ses contenus numériques au niveau de chacun de ces acteurs CDNs et délègue à un agent intermédiaire (« broker » en anglais) la redirection dynamique des utilisateurs vers un acteur CDN particulier en fonction de critères de QoE, de géolocalisation et/ou de coût. Dans le second cas de figure, un acteur CDN «amont» choisit un acteur CDN local, dit CDN «aval» (downstream CDN en anglais), par zone de couverture en fonction de critères de coût et de capacité, et redirige les requêtes qu'il reçoit vers le réseau CDN « aval » le plus proche.

Ces deux cas de figures présentent un certain nombre d'inconvénients. En effet , le processus de prise de décision repose sur la communication d'informations critiques, telles que la capacité ou le modèle de facturation, que ce soit de par les acteurs CDNs à un fournisseur de contenus, ou par les acteurs CDNs locaux à un acteur CDN amont, informations que les acteurs CDNs n'ont pas envie de divulguer pour des raisons de confidentialité ou de concurrence sur le marché de CDNs.

En outre, le fournisseur de contenus décideur ou le réseau CDN amont n'ont pas une visibilité suffisante sur tous les CDNs candidats, en particulier les CDNs émergents sur le marché, tels les opérateurs Telecom.

Enfin, la prise de décision statique est très simpliste (placer tous les contenus dans tous les CDNs de la fédération, rediriger les requêtes vers le CDN le plus proche, reposer uniquement sur des critères dynamiques lors de la redirection...). Ainsi, elle n'est pas adaptée à des scénarios complexes où les CDNs candidats deviennent de plus en plus nombreux et distribués et présentent des limitations en termes de capacités de stockage et/ou de streaming.

La présente invention a pour objet de remédier aux inconvénients précités et propose à cet effet un procédé d'établissement de fédérations de distribution de contenus dans un système comprenant une pluralité de fournisseurs de contenus et une pluralité de distributeurs de contenus, le procédé comprenant une étape d'association, mise en œuvre par une entité intermédiaire distincte desdits fournisseurs de contenus et desdits distributeurs de contenu, d'au moins un desdits fournisseurs de contenus avec au moins un desdits distributeurs de contenus en fonction de paramètres fournis par lesdits fournisseurs de contenus à l'entité intermédiaire et de paramètres fournis par lesdits distributeurs de contenus à l'entité intermédiaire.

En laissant le soin à un intermédiaire tiers de collecter les informations nécessaires, aussi bien du côté des fournisseurs de contenus que du côté des distributeurs de contenus, il est possible d'utiliser des informations sensibles que ces acteurs n'auraient pas échangé directement entre eux afin de provisionner, de manière équitable et optimale, une fédération de distribution de contenus entre ces acteurs. Cet intermédiaire peut en outre disposer d'une plus grande visibilité quant aux nouveaux distributeurs de contenu émergeants sur le marché dont un fournisseur de contenu ne dispose pas directement.

Selon une mode de réalisation où les paramètres fournis par lesdits fournisseur de contenus comprennent, pour chaque fournisseur de contenus, au moins un premier indicateur technique, relatif à une caractéristique technique concernant un contenu numérique par le fournisseur de contenus, et les paramètres fournis par lesdits distributeurs de contenus comprennent, pour chaque distributeur de contenus, au moins un deuxième indicateur technique, relatif à la capacité technique du distributeur de contenus de livrer un contenu numérique, le procédé comprend en outre la présélection, pour au moins un desdits fournisseurs de contenus, d'au moins un distributeur de contenus candidat parmi lesdits distributeurs de contenu, en fonction d'une comparaison entre les premiers et les deuxième indicateurs techniques, et la sélection, parmi les distributeurs de contenus candidats présélectionnés, du au moins un distributeur de contenu associé audit au moins un fournisseur de contenus.

Il est ainsi possible de provisionner une fédération de distribution de contenus conciliant les besoins techniques des contenus fournis par les fournisseurs de contenus et les possibilités techniques offertes par les distributeurs de contenus, par exemple en termes de type de codage supporté et protocole de livraison , sans avoir à échanger ce type d'informations sensibles entre ces différents acteurs, potentiellement concurrents.

Selon une caractéristique avantageuse, le premier indicateur technique est un indicateur du protocole de transmission utilisé par le fournisseur de contenus pour fournir un contenu numérique, et le deuxième indicateur technique est un indicateur d'un protocole de transmission supporté par le distributeur de contenus, afin de garantir la compatibilité des protocoles de transmission employés au sein d'une même fédération.

Selon une autre caractéristique avantageuse, le premier indicateur technique est un indicateur d'un format de codage utilisé par le fournisseur de contenus pour encoder un contenu numérique et le deuxième indicateur technique est un indicateur d'un format de codage supporté par le distributeur de contenus, afin de garantir la compatibilité des formats de codage employés au sein d'une même fédération.

Dans un mode de réalisation, les paramètres fournis par lesdits fournisseur de contenus comprennent, pour chaque fournisseur de contenus, un indicateur de couverture de service, relatif à une zone de fourniture de service visée par ledit fournisseur de contenus, et les paramètres fournis par lesdits distributeurs de contenus comprennent, pour chaque distributeur de contenus, un indicateur de couverture de distribution, relatif à une zone de distribution de contenus couverte par ledit distributeur de contenus, la présélection étant alors effectuée en outre en fonction de la comparaison entre lesdits indicateurs de couverture de service et lesdits indicateurs de couverture de distribution.

Il est ainsi possible de provisionner une fédération de distribution de contenus conciliant les besoins des fournisseurs de contenus et les possibilités des distributeurs de contenus, en termes de couverture administrative ou géographique, sans avoir à échanger ce type d'informations sensibles entre ces différents acteurs.

Selon une caractéristique avantageuse, la sélection comprend en outre les étapes suivantes :

déterminer, pour au moins un point de présence de chaque distributeur de contenu candidat, un indicateur de distribution de contenu, indiquant si la présence dans ledit point de présence d'un contenu numérique fourni par ledit fournisseur de contenus permet la maximisation d'une fonction de marge de fédération ; et

sélectionner, parmi les distributeurs de contenus candidats, au moins un distributeur de contenu comportant un point de présence présentant un indicateur de distribution de contenu non nul.

Il est ainsi possible d'affiner le provisionnement d'une fédération de distributeurs de contenus en tenant compte des coûts et des revenus induits au niveau des distributeurs de contenus ainsi que des limitations en termes de capacité de ces distributeurs.

Dans un mode de réalisation, le procédé comprend en outre le stockage d'un contenu numérique dans les points de présence des distributeurs de contenus sélectionnés présentant un indicateur de distribution de contenu non nul pour ledit contenu.

Selon une autre caractéristique avantageuse, le procédé comprend en outre les étapes suivantes :

déterminer un indicateur de distribution de charge représentant la façon dont une requête émanant d'une zone déterminée, pour un contenu numérique fourni par ledit fournisseur de contenus, soit redirigée vers un point de présence d'un distributeur de contenus candidat, en fonction de ladite fonction de marge de fédération ;

désigner dans une table de routage, au moyen dudit indicateur de distribution de charge, un distributeur de contenu sélectionné vers lequel router une requête pour ledit contenu numérique émanant de ladite zone déterminée.

Il est ainsi possible de gérer le routage des requêtes reçues au sein de la fédération de manière à tenir compte des coûts et des revenus induits au niveau des distributeurs de contenus ainsi que de la capacité streaming de ces différents acteurs.

Dans un mode de réalisation particulier, ces indicateurs de distribution de contenu et de distribution de charge sont déterminés en maximisant la fonction de marge de fédération suivante :

$$f = \alpha\left[y_{i,l}^{p}\right] - \beta\left[x_{p}^{l}\right] ,$$

où :

- $x_{p}^{l}$ est l'indicateur de distribution de contenu relatif à la présence d'un contenu $c_l$ dans le point de présence $PoP_p$ ;

- $y_{i,l}^{p}$ est l'indicateur de distribution de charge représentant la probabilité qu'une requête émanant d'une zone $Z_i$, pour un contenu $c_i$, soit redirigée vers un point de présence $PoP_p$ ;

- a est une matrice dont les coefficients dépendent d'au moins un critère technique parmi le débit moyen d'un contenu appartenant audit fournisseur de contenus, le nombre de sessions servies par ledit fournisseur de contenus pendant une durée déterminée, la répartition de la demande et de la popularité de contenus sur les différentes zones de l'empreinte de couverture dudit fournisseur de contenus ;

- f3 est un vecteur dont les coefficients dépendent de la taille moyenne d'un contenu appartenant audit fournisseur de contenus.

Il est en outre proposé une entité pour l'établissement d'une fédération de distribution de contenu entre une pluralité de fournisseurs de contenus et une pluralité de distributeurs de contenus, cette entité comprenant :

des moyens de mémorisation dans lesquels sont mémorisés une pluralité de paramètres fournis par lesdits fournisseurs de contenus et un pluralité de paramètres fournis par lesdits distributeurs de contenus ;
des moyens de traitement configurés pour récupérer les paramètres mémorisés dans les moyens de mémorisation et associer au moins un desdits fournisseurs de contenus avec au moins un desdits distributeurs de contenus, en fonction desdits paramètres fournis par lesdits fournisseurs de contenus et desdits paramètres fournis par lesdits distributeurs de contenus, afin de former une ou plusieurs fédérations de distributeurs de contenus.

La présente invention propose également un système de distribution de contenus numériques comprenant une pluralité de fournisseurs de contenus, une pluralité de distributeurs de contenus et l'entité intermédiaire ci-avant, dans lequel :

les fournisseurs de contenus sont configurés pour envoyer des paramètres à l'entité intermédiaire ;
les distributeurs de contenus sont configurés pour envoyer des paramètres à l'entité intermédiaire ;
l'entité intermédiaire est configurée pour associer au moins un desdits fournisseurs de contenus avec au moins un desdits distributeurs de contenus, en fonction desdits paramètres fournis par lesdits fournisseurs de contenus et desdits paramètres fournis par lesdits distributeurs de contenus, afin de former une fédération de distributeurs de contenus.

Selon une implémentation particulière, les différentes étapes du procédé d'établissement de fédérations selon l'invention sont mises en œuvre par un logiciel ou programme d'ordinateur, ce programme d'ordinateur comportant des instructions de code pour la mise en œuvre du procédé d'établissement d'une fédération de distributeurs de contenus tel que décrit précédemment, lorsque ce programme est exécuté par un processeur de données.

Ce programme peut utiliser n'importe quel langage de programmation, et être sous la forme d'un code source, code objet, ou de code intermédiaire entre code source et code objet, tel que dans une forme partiellement compilée, ou dans n'importe quelle autre forme souhaitable.

L'invention vise aussi un support informatique, lisible par un ordinateur ou un processeur de données, et comportant des instructions d'un programme tel que mentionné ci-dessus. Ce support informatique peut être n'importe quelle entité ou dispositif capable de stocker le programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette ou un disque dur. D'autre part, ce support informatique peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, ce support informatique peut être un circuit intégré dans lequel le programme est incorporé, le circuit étant adapté pour exécuter ou pour être utilisé dans l'exécution du procédé en question.

D'autres caractéristiques et avantages de l'invention apparaîtront à la lecture dans la description détaillée ci-après de modes de réalisation particuliers, donnés à titre d'exemples non limitatifs, et des figures annexées dans lesquelles :

- la figure 1 représente schématiquement une architecture de contrôle permettant de fédérer des distributeurs de contenu et dans laquelle est mise en œuvre la présente invention ;
- la figure 2 illustre est une entité intermédiaire selon un mode de réalisation de l'invention ; et
- la figure 3 illustre les étapes du procédé d'établissement d'une fédération de distributeurs de contenus selon un mode de réalisation de l'invention.

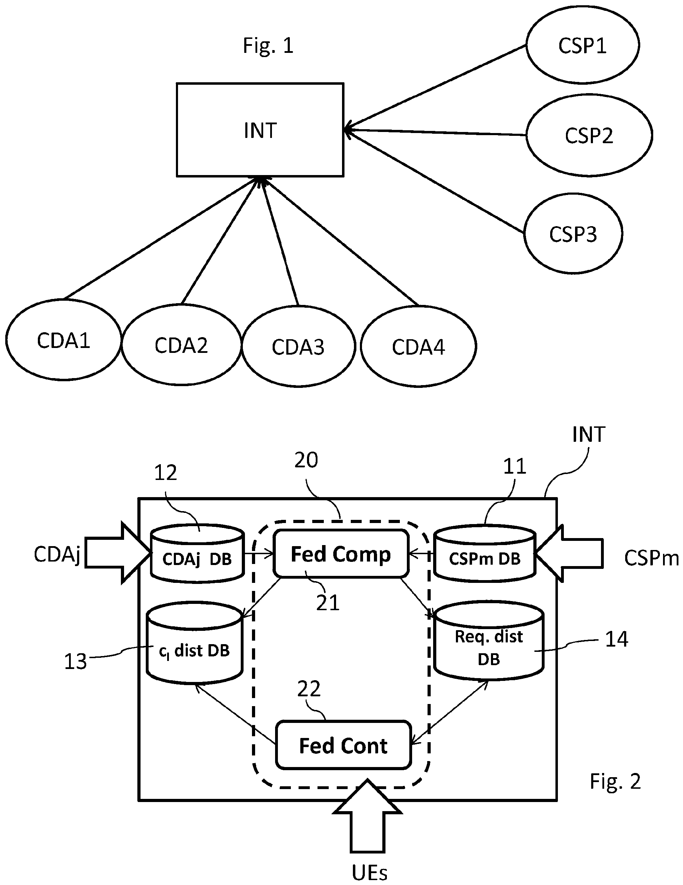

On se réfère tout d'abord à la **figure 1** où est illustrée une architecture de contrôle pour établir et gérer des fédérations de distributeurs de contenus. La présente invention est mise en œuvre dans le cadre de cette architecture.

L'architecture de contrôle proposée sert d'intermédiaire entre une première catégorie d'acteurs, dits « distributeurs de contenus » (« Content distribution actor » ou CDA, en anglais), et une autre catégorie d'acteurs dits « fournisseurs de contenus » (« Content service provider » ou CSP, en anglais).

Les fournisseurs de contenus (ici désignés par CSP1 à CSP3, sans que l'invention ne se limite à ce nombre particulier de fournisseurs de contenus) possèdent un catalogue de contenus numériques (ces contenus peuvent être des contenus vidéo, audio ou autres) ayant des contraintes technologiques particulières (format de codage, protocole de transmission). De plus, chaque fournisseur de contenus a des contraintes en termes de couverture, de demande et de popularité qu'il souhaite adresser en déléguant la distribution de ses contenus à un ou plusieurs distributeurs de contenu.

Les distributeurs de contenus (ici désignés par CDA1 à CDA4, sans que l'invention ne se limite à ce nombre particulier de distributeurs de contenus) proposent leurs atouts en termes de capacité (de stockage et de diffusion/streaming) et de diversité (couverture géographique) afin de participer à une fédération de distributeurs de contenu qui répond conjointement aux contraintes des fournisseurs CSPm en livrant leurs contenus aux utilisateurs finaux.

Chaque CDAj possède un ou plusieurs points de présence $PoP_p$, eux-mêmes comprenant un ou plusieurs nœuds de stockage et de diffusion. Chaque point de présence $PoP_p$ couvre une ou plusieurs zones $Z_i$ géographiques (e.g. un pays ou une région) ou administratives (e.g. d'un système autonome tel qu'un réseau géré par un opérateur de télécommunications). Ainsi, un distributeur de contenus CDAj peut aussi bien être un acteur local, avec un seul point de présence et une couverture géographique restreinte, qu'un acteur global, avec une multitude de points de présence et une couverture géographique large (plusieurs zones).

Une entité intermédiaire INT (« broker » en anglais), pouvant prendre la forme d'un serveur intégrant les fonctions décrites par la suite et interagit avec les CSPm and les CDAj en tant que tiers indépendant. Cette entité permet de construire une ou plusieurs fédérations de distributeurs de contenus capables de répondre au mieux aux besoins de service des différents CSPm.

La **figure 2** illustre plus en détails cette entité intermédiaire selon un mode de réalisation de l'invention.

Cette entité INT comprend en particulier des moyens de traitement 20 (e.g. un processeur de traitement de données), exécutant des instructions pour mettre en œuvre l'établissement et le contrôle de fédérations de distributeurs de contenus, et des moyens de mémorisation (e.g. sous la forme de base de données) dans lesquels sont mémorisés un certain nombre d'informations et de paramètres utilisés par les moyens de traitement pour l'établissement et le contrôle de fédérations susmentionnés.

Ces moyens de mémorisation comprennent notamment une première base de données 11 dans laquelle sont mémorisés des paramètres fournis par les fournisseurs de contenus CSPm désireux d'étendre leur plateforme et/ou leur couverture. Ces paramètres peuvent notamment être les suivants, pour chaque fournisseur de contenus CSPm :

1) un paramètre de couverture de service, relatif aux zone(s) de fourniture de service visée(s) par le fournisseur CSPm quant à son offre de service (autrement dit son « empreinte de service »). Cette empreinte e peut être exprimée sous la forme d'une ou plusieurs zones Zi représentant des zones géographiques (e.g. des pays ou régions avec des frontières) ou administratives (e.g. pour des systèmes autonomes AS) distinctes;

2) des indicateurs techniques, relatifs à des caractéristiques techniques concernant un contenu fourni par le fournisseur CSPm. Parmi ces indicateurs techniques:

- le(s) format(s) de codage des contenus numériques (e.g. MPEG4 pour une vidéo à diffuser) du fournisseur CSPm ;
- le(s) protocole(s) de transmission (e.g. RTP ou http) utilisé(s) par le fournisseur CSPm pour livrer ses contenus ;
- éventuellement une identification du type de contenus (vidéo, audio, page html, jeux vidéo...) livrés par le fournisseur CSPm ;

3) d'autres informations relatives à la demande des utilisateurs finaux pour les contenus d'un fournisseur CSPm, telles que :

- la liste $C_m$ des contenus $c_l$ fournis le fournisseur de contenus CSPm ;
- le nombre $K_m$ de sessions servies par mois par le fournisseur CSPm ;
- la répartition $D_i^m$ de la demande de contenus sur les différentes zones Zi de l'empreinte de couverture de service du fournisseur CSPm ;
- la popularité $V_i^l$ d'un contenu $c_l$ au niveau d'une zone $Z_i$ de l'empreinte de couverture de service du fournisseur CSPm ;
- le débit moyen $MBCU_m$ d'un contenu appartenant au fournisseur CSPm (« Mean Bitrate of a Content Unit ») ;
- la taille moyenne $MVCU_m$ d'un contenu appartenant au fournisseur CSPm (« Mean Volume of a Content Unit ») ;
- la durée moyenne $MDCU_m$ d'un contenu appartenant au fournisseur CSPm (« Mean Volume of a Content Unit ») ;

Les moyens de mémorisation de l'entité INT comprennent également une deuxième base de données 12 dans laquelle sont mémorisés des paramètres fournis par les distributeurs de contenus CDAj désireux fédérer avec d'autres acteurs. Ces paramètres peuvent notamment être les suivants, pour chaque distributeur de contenus CDAj :

1) des indicateurs techniques, relatifs à des caractéristiques techniques concernant la capacité technique du distributeur CDAj à livrer un contenu numérique donné. Parmi ces indicateur techniques :

- le(s) protocole(s) de transmission (e.g. RTP ou http) supporté(s) par le distributeur CDAj pour livrer des contenus numériques ;
- le(s) format(s) de codage de contenu numérique (e.g. MPEG4 pour une vidéo à diffuser) supporté(s) par le distributeur CDAj ;

2) un paramètre de couverture de distribution, relatif aux zone(s) de distribution couverte(s) par le distributeur CAj (autrement dit son « empreinte de distribution »). Tout comme pour l'empreinte de service,, l'empreinte de distribution peut être exprimée sous la forme d'une ou plusieurs zones $Z_j$ représentant des zones géographiques (e.g. des pays ou régions avec des frontières) ou administratives (e.g. pour des systèmes autonomes) distinctes ;

3) d'autres informations relatives à la capacité technique du distributeur CDAj , telles que :

- le nombre de « points de présence » $PoP_p$ dont le distributeur CDAj dispose, par exemple sous forme d'une liste $PoPList_j$ de point de présence ;
- la capacité $SC_p$ de stockage d'un point de présence $PoP_p$, pour l'ensemble des points de présence du distributeur CDAj ;
- la capacité $PC_p$ de streaming d'un point de présence $PoP_p$, pour l'ensemble des points de présence du distributeur CDAj ;
- la distance $Dis_p^i$ entre un point de présence $PoP_p$ et une zone $Z_i$.

4) d'autres informations relatives à des caractéristiques économiques du distributeur CDAj telles que la tarification $F_j^i$ appliquée par le distributeur CDAj pour distribuer un contenu vers une zone Zi de son empreinte de distribution (exprimée par exemple par unité de contenu, par exemple pour 1 Mbps).

Les différents paramètres stockés dans les bases de données 11 et 12 sont utilisés comme paramètres d'entrée pour un algorithme exécuté au niveau des moyens de traitement 20 (cet algorithme étant détaillé par la suite), lequel fournit des paramètres de sorties destinés à être stockés dans deux autres bases de données 13 et 14 faisant partie des moyens de mémorisation.

La base de données 13 est notamment utilisée pour mémoriser les paramètres de distribution de contenu générés. Ces paramètres renseignent sur l'emplacement des contenus $c_l$ appartenant aux différents CSPm au niveau des différents CDAj. La base de données 14 est, elle, utilisée pour mémoriser les paramètres de distribution de charge. Ces paramètres sont utilisés pour prendre des décisions sur le routage des requêtes venant des utilisateurs finaux vers les différents CDAj.

Les moyens de traitement 20 comprennent notamment un moteur d'établissement de fédérations 21 et un moteur de contrôle de fédérations 22 (ces deux moteurs pouvant être implémentés typiquement sous la forme d'un programme d'ordinateur dont les instructions sont mémorisées dans une mémoire associée à un processeur capable d'exécuter ces instructions).

Le moteur 21 met en œuvre le procédé d'établissement de fédérations en fonction des paramètres mémorisés dans les bases de données 11 et 12. Ce procédé, détaillé par la suite, consiste à établir des fédérations de CDAj, chacune composée d'un ensemble de CDAj visant à répondre conjointement à la demande d'un ensemble de CSPm, afin d'associer ces acteurs au sein d'une même fédération. Le moteur 22 est capable de contrôler dynamiquement les fédérations de distributeurs de contenu, établies statiquement et au préalable grâce au moteur 21, en fonction de paramètres mémorisés dans les bases de données 13 et 14.

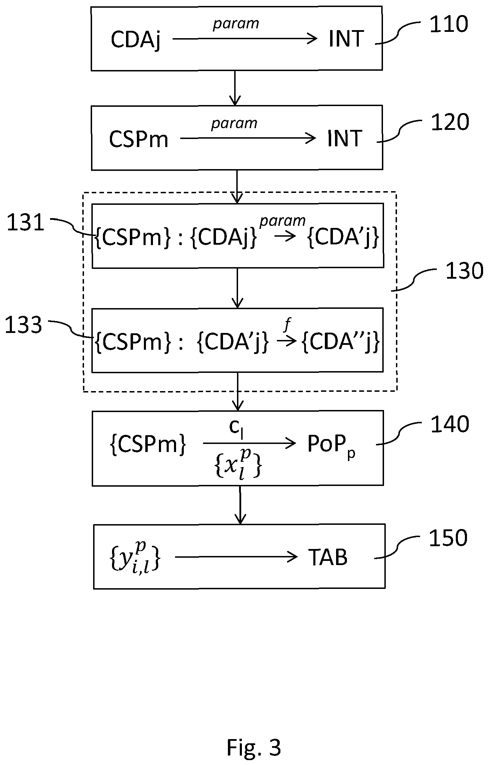

On se réfère maintenant à la **figure 3** qui illustre un procédé d'établissement d'une fédération de distributeurs de contenu selon un mode de réalisation de la présente invention.

Dans ce procédé, au cours d'une étape 110 préliminaire, les différents distributeurs de contenus CDAj, désirant participer à une fédération de distributeurs de contenus, fournissent certains, voire l'ensemble, des paramètres décrits précédemment (notamment leurs paramètres d'empreinte de distribution, les formats de codage de contenus supportés et les protocoles de transmission supportés) à l'entité intermédiaire INT, en les envoyant au sein de messages sous formats numériques à cette dernière, par exemple suite à leur souscription à un service de fédération offert par l'entité INT. Ces paramètres sont alors mémorisés dans la base de données 12 de l'entité INT.

Lors d'une autre étape 120 préliminaire, les différents fournisseurs de contenus CSPm, désirant bénéficier de capacités de stockage et de livraison au sein d'une fédération de distributeurs de contenus, fournissent certains, voire l'ensemble, des paramètres décrits précédemment (notamment leurs paramètres d'empreinte de fourniture de service, les formats de codage des contenus numériques qu'ils rendent disponibles et les protocoles de transmission utilisés pour les fournir) à l'entité intermédiaire INT, en les envoyant au sein de messages sous formats numériques à cette dernière, par exemple suite à leur souscription à un service de fédération offert par l'entité INT. Ces paramètres sont alors mémorisés dans la base de données 11 de l'entité INT.

Une fois que l'entité intermédiaire INT dispose, dans ses bases de données 11 et 12, des paramètres fournis aussi bien par les distributeurs de contenus CDAj désireux d'offrir leur capacité que par les fournisseurs de contenus CSPm désireux d'en bénéficier, l'entité intermédiaire INT peut associer un certain nombre de ces fournisseurs CSPm avec un certain nombre de ces distributeurs CDAj, afin de former une fédération, et ce en fonction de ces paramètres (étape 130) dont seule l'entité INT possède la connaissance globale.

Dans un mode de réalisation, pour procéder à cette association en vue de former une fédération, l'entité INT classifie les fournisseurs de contenus CSPm en groupes de fournisseurs {CSPm}, en fonction des critères techniques en relation avec la nature de leurs contenus et/ ou avec leur empreinte de service. Typiquement, les CSPm ayant des critères techniques similaires et/ou la même empreinte service appartiennent à un même groupe. L'entité INT procède alors à une phase de présélection de distributeurs de contenu (étape 131) correspondant à ce groupe. Pendant cette phase, parmi tous les distributeurs de contenu, seuls ceux qui permettent de répondre aux contraintes techniques d'un certain groupe {CSPm} seront présélectionnés.

Lors de cette phase de présélection, un ou plusieurs indicateurs techniques relatifs, pour chaque fournisseur CSPm du groupe {CSPm}, à une caractéristique technique d'un contenu $c_i$ fourni par ce fournisseur SPm, ainsi qu'un ou plusieurs indicateurs techniques relatifs, pour chaque distributeur CDAj, à la capacité de ce distributeur CDAj à supporter une caractéristique technique propre à un contenu numérique. Plus précisément, l'entité INT compare, pour un ou plusieurs fournisseurs CSPm, ses indicateurs techniques avec les indicateurs techniques fournis par les distributeurs CDAj, afin de déterminer les distributeurs CDAj dont les caractéristiques techniques sont compatibles avec celles de ce(s) fournisseur(s) CSPm.

Les distributeurs CAj dont c'est le cas sont alors présélectionnés sont dits « candidats » et sont désignés par un groupe {CDA'j} qui forme un sous-ensemble de l'ensemble des distributeurs {CDAj}. Parmi les CDA'j présents dans le groupe {CDA'j} sont ensuite choisis les distributeurs CDA"j qui participant effectivement à une fédération visant un certain groupe de CSPm (étape 133). Les candidats sélectionnés forment un groupe {CDA"j} associés au(x) fournisseur(s) CSPm du groupe {CSPm} au sein d'une même fédération.

Parmi les indicateurs techniques utilisés lors de cette présélection, les indicateurs techniques relatifs au protocole de transmission sont avantageusement utilisés, afin de garantir une fédération dont les distributeurs candidats CDA'j et le(s) fournisseur(s) CSPm utilisent un même protocole de transmission pour livrer des contenus.

Les indicateurs techniques relatifs au format de codage (utilisé pour encoder un contenu $c_i$ côté fournisseur(s) CSPm et supporté par les distributeurs CDAj) peuvent aussi être utilisés, afin de garantir une fédération où les distributeurs candidats CDA'j supportent le type de codage des contenus qu'ils s'engagent à délivrer, afin de pouvoir les traiter.

L'entité INT peut également utiliser les indicateurs de couverture (empreinte de service pour le(s) fournisseur(s) CSPm et empreinte de distribution pour les distributeurs CDAj), désignant les zones géographiques ou administratives couvertes par les CSPm et les CDAj afin d'associer, au sein d'une même fédération, des fournisseurs CSPm avec des distributeurs CDAj dont la zone de couverture est incluse dans (voire égale à) la zone de couverture de ces fournisseurs CSPm.

Une fois les distributeurs candidats CDA'j présélectionnés au moyen des paramètres susmentionnés, le(s) distributeur(s) CDA"j à associer au(x) fournisseur(s) CSPm peuvent alors être sélectionnés (étape 133) parmi les candidats CDA'j.

Tous les distributeurs candidats CDA'j peuvent ainsi être sélectionnés, si l'on se contente des seuls critères relatifs aux indicateurs utilisés lors de la présélection. Cependant, il est avantageux à ce stade d'effectuer un processus de sélection plus strict, afin d'exclure certains distributeurs candidats ne répondant pas à d'autres critères techniques, voire économiques (e.g. de facturation), et ce de manière équitable entre les distributeurs candidats.

La procédure de sélection prenant lieu pendant l'étape 133, pourrait être implémentée, en introduisant les deux variables suivantes :

- un indicateur de distribution de contenu $x_p^l$ (implémenté sous forme d'une variable binaire) qui indique, pour un point de présence PoPp donné appartenant à un distributeur candidat CDA'j, si un contenu numérique $c_l$, fourni par le fournisseur CSPm, est effectivement présent (dans le cas d'un tel résultat positif, $x_p^l = 1$ ) ou pas (dans ce cas négatif, $x_p^l = 0$ ) dans ce point de présence PoPp. Cet indicateur sert à prendre une décision à un instant t0 sur où placer un contenu $c_l$ donné dans une fédération.

- un indicateur de distribution de charge $y_{i,l}^p$ (implémentée sous forme de variable linéaire comprise entre 0 et 1) spécifiant, pour un point de présence PoPp, la probabilité qu'une requête émanant d'une zone géographique $Z_i$ et visant un contenu numérique $c_l$ peut être redirigée vers ce point de présence PoPp. Cet indicateur sert à peupler une table de routage qui est utilisée ultérieurement par l'entité intermédiaire INT pour prendre des décisions dynamiques de routage des requêtes.

On introduit également une fonction *f* dite « fonction de marge de fédération », qui représente la marge, en termes de gain technique par rapport aux coûts techniques, d'une fédération de distributeurs de contenus {CDA"j}. Cette marge est fonction de la politique de distribution des contenus et des requêtes appartenant à un groupe de CSPm {CSPm} au sein des différents acteurs de la fédération.

Cette fonction f peut prendre la forme suivante :

$$f = \alpha \left[ y_{i,l}^p \right] - \beta \left[ x_p^l \right]$$

Où :

- $\alpha$ est une matrice dont les coefficients dépendent d'un certain nombre de paramètres techniques, tels le débit moyen d'un contenu appartenant à un fournisseur CSPm, la répartition de la demande et la popularité des contenus d'un certain CSPm par zone, ainsi que de critères économiques tels que la facturation appliquée par un distributeur CDAj au niveau des différentes zones.
- $\beta$ est un vecteur dont les coefficients dépendent d'un certain nombre de paramètres techniques, tels que la taille moyenne des contenus appartenant à un fournisseur CSPm, ainsi que de critères économiques tels que le coût de stockage moyen d'une certaine quantité de données par le distributeur CDAj.

En particulier, les coefficients individuels $a_{ij}^{ml}$ et $\beta_m$ de la matrice $\alpha$ et du vecteur $\beta$ peuvent être exprimés de la façon suivante, en fonction des paramètres précédemment introduits et stockés dans les bases de données 11 et 12 de l'entité INT :

$$\alpha_{ij}^{ml} = MBCU_m \times K_m \times D_i^m \times \left( F_j^i - Cproc - Cband_j^i \times Dis_p^i \right) \times V_i^l$$

$$\beta_m = Cstor \times MVCU_m$$

Où, outre les paramètres déjà mentionnés :

- Cstor est le coût moyen de stockage d'une quantité déterminée de données (e.g. 1 Go) dans le distributeur CAj durant une donnée déterminée (e.g. 1 mois) ;
- Cproc est le coût moyen de diffusion (« streaming) d'un débit déterminé de données (e.g. 1 Mbps) par le distributeur CAj, ce coût dépendant des ressources calculatoires (CPU) de l'architecture hardware de ce distributeur ;
- $Cband_j^i$ est le coût moyen pour router un débit déterminé de données (e.g. 1 Mbps) au travers d'un réseau intermédiaire (système autonome indépendant administrativement) situé entre le distributeur CAj et une zone $Z_i$ géographique ou administrative déterminée.

L'entité INT utilise ainsi cette fonction *f* pour déterminer les indicateurs $x_p^l$ et $y_{i,l}^p$ correspondant aux différents points de présence PoPs, contenus $c_l$ et zones $Z_i$ t permettant de maximiser la fonction f de marge de fédération. Une fois calculés, ces indicateurs sont alors utilisés pour effectivement distribuer les contenus au sein d'une fédération (et ainsi exclure les distributeurs candidats CDA'j dans lesquels aucun contenu n'est distribué) et gérer le routage des requêtes d'utilisateurs vers les contenus stockés dans cette fédération.

Au cours de ce processus de maximisation de cette fonction f, un certain nombre de contraintes peut être pris en compte. Parmi celles-ci :

1) Une contrainte sur la capacité de stockage des distributeurs CAj, exprimée de la façon suivante :

$$\sum_m \sum_l MVCU_m \times x_p^l \leq SC_p \ \forall p \ \in \cup_j \ PoPList_j$$

Où :

- m e *SPList,* liste des CSPm appartenant à un même groupe {CSPm} et pour lesquels on cherche à établir une fédération ;
- $l \in C_m$, liste des contenus $c_i$ appartenant à un fournisseur CSPm ;
- *PoPList_j* est la liste des points de présence PoP_p d'un distributeur de contenu CDAj.

2) Une contrainte sur la capacité de diffusion (« streaming ») des distributeurs CDAi, exprimée de la façon suivante :

$$\sum_m \sum_i \sum_l \mu_i^{ml} \times y_{il}^p \leq PC_p \times T \ \forall p \ \in \cup_j \ PoPList_j$$

Où, outre les paramètres déjà définis ci-avant :

- $\mu_i^{ml}$ est un paramètre tel que :

$$\mu_i^{ml} = MBCU_m \ \times K_m \ \times D_i^m \times MDCU_m \times V_i^l$$

3) Une contrainte d'équité entre participants à la fédération (« fairness ») de distributeurs de contenus.

Cette dernière contrainte d'équité vise à définir une politique de fédération qui garantit à chaque participant à la fédération un revenu « juste ». Ce revenu dépend, d'un côté, des atouts techniques du participant concerné, en termes de capacité et de diversité géographique, et, d'un autre côté, de son positionnement en termes de facturation par rapports à d'autres acteurs avec des caractéristiques similaires (e.g. couvrant la même zone). Plusieurs stratégies d'équité sont possibles (« Shapley value » dans la théorie des jeux, « Max-Min fairness », etc.). Cette contrainte peut être exprimée de la façon suivante :

$$\sum_m \sum_p \sum_i \sum_l \Omega_{ij}^{ml} \times y_{il}^p \geq Xeta_j \times MaxRev_j \forall j \ \in CDNList$$

où, outre les paramètres définis ci-avant :

- *Xeta$_j$* est un paramètre entre 0 et 1 qui dépend de la politique de facturation du distributeur CDAj (facturant plus ou moins que les autres) ;
- *MaxRev$_j$* est le revenu maximal qui pourrait être obtenu par un distributeur CDAj dans le cadre de la fédération, vu sa capacité et sa couverture existantes. Ce revenu est obtenu si la contribution technique du distributeur CDAj à la fédération est optimale (CDAj utilise sa capacité existante de la manière la plus efficace possible dans le but de maximiser son revenu) ;
- $\Omega_{ij}^{ml}$ est un paramètre tel que $\Omega_{ij}^{ml} = MBCU_m \times K_m \times D_i^m \times F_j^i \times V_i^l$

Une fois les indicateurs $x_p^l$ déterminés, l'entité INT sélectionne (étape 133), parmi les distributeurs candidats CDA'j, ceux qui possèdent au moins un point de présence PoP$_p$ présentant au moins un indicateur $x_p^l$ non nul $(x_p^l=1)$.

En d'autres termes, seuls les distributeurs candidats CDA'j permettant une distribution optimale des contenus à livrer, en termes de marge de fédération, sont conservés (ces acteurs forment alors un sous-ensemble {CDA"j} de {CDA'j}) et participent à une fédération visant un groupe {CSPm} de fournisseurs de contenu. Chaque contenu c$_l$ appartenant à un CSPm du groupe {CSPm} est ensuite transmis au(x) CDA"j ayant au moins un point de présence PoP$_p$ pour lequel $x_p^l=1$ (étape 140).

En outre, une table de routage TAB est déterminée (étape 150) pour permettre le routage des requêtes reçues d'utilisateurs finaux, pour un contenu numérique stocké dans la fédération, vers le bon distributeur de contenu. La décision de routage dépend des indicateurs de distribution de charge $y_{i,l}^p$. Ces indicateurs sont calculés de telle façon à prendre en compte, d'une part, la distance entre l'utilisateur et le point de présence PoP$_p$ depuis lequel le contenu requis sera servi et, d'autre part, la présence de ce contenu au niveau du point de présence PoP$_p$ sélectionné.

Ceci peut être exprimé dans cette table TAB de la façon suivante : un distributeur de contenus CDA"j, sélectionné au sein d'une fédération, est associé à chaque requête r caractérisée par un contenu requis c$_l$ et une zone d'origine Z$_i$. Le distributeur de contenu en question doit disposer d'au moins un point de présence PoP$_p$ qui soit suffisamment proche de la zone Z$_i$ et où est stocké le contenu c$_l$

Les étapes 130 à 150 décrites précédemment peuvent tout à fait être mises en œuvre pour associer des distributeurs de contenus à un unique fournisseur de contenus, mais sont particulièrement appropriées lorsqu'il faut associer une pluralité de distributeurs de contenus avec une pluralité de fournisseurs de contenus. Dans ce dernier cas, dans un mode de réalisation particulier, les fournisseurs de contenus peuvent être classés en groupes distincts pour chacun desquels une fédération est formée.

Les étapes 130 à 150 décrites précédemment concernent la gestion d'une première phase, dite « statique », à un instant t0, durant laquelle une ou plusieurs fédérations sont établies, de manière indépendante et équitable, par l'entité intermédiaire INT, au moyen de son moteur d'établissement de fédérations 21. Naturellement, une fois ces fédérations établies, l'entité intermédiaire INT gère dynamiquement ces fédérations durant une second phase, dite « dynamique », au moyen de son moteur de contrôle de fédérations 22, lequel utilise notamment les indicateurs de charge de contenus, stockées dans la base de données 14, ainsi que la table de routage TAB peuplée au moyen des indicateurs pour router les requêtes des utilisateurs finaux vers les points de présence de la fédération où se trouvent les contenus requis.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

**Revendications**

1. Procédé d'établissement d'une fédération de distribution de contenus composée d'au moins un fournisseur de contenus et au moins un distributeur de contenus, au sein d'un système comprenant une pluralité de fournisseurs de contenus (CSPm) et une pluralité de distributeurs de contenus (CDAj), le procédé comprenant ;

la fourniture (110) de premiers paramètres, par lesdits fournisseurs de contenus du système, à une entité intermédiaire (INT) distincte desdits fournisseurs de contenus et desdits distributeurs de contenu ;
la fourniture (120) de seconds paramètres, par lesdits distributeurs de contenus du système, à ladite entité intermédiaire (INT) ;

une étape d'association (130), mise en œuvre par ladite entité intermédiaire (INT), d'au moins un desdits fournisseurs de contenus du système avec au moins un desdits distributeurs de contenus du système, en fonction des premiers paramètres et seconds paramètres ;

l'établissement d'une fédération de distribution de contenus composée desdits au moins un fournisseur de contenus et au moins un distributeur de contenus associés.

2. Procédé selon la revendication 1, dans lequel :

les premiers paramètres comprennent, pour chaque fournisseur de contenus, au moins un premier indicateur technique, relatif à une caractéristique technique concernant un contenu numérique fourni par le fournisseur de contenus ;

les deuxièmes paramètres comprennent, pour chaque distributeur de contenus, au moins un deuxième indicateur technique, relatif à la capacité technique du distributeur de contenus de livrer un contenu numérique ;

le procédé comprenant en outre la présélection (131), pour au moins un desdits fournisseurs de contenus, d'au moins un distributeur de contenus candidat (CDA'j) parmi lesdits distributeurs de contenu, en fonction d'une comparaison entre les premiers et les deuxième indicateurs techniques ; et

la sélection (133), parmi les distributeurs de contenus candidats présélectionnés, du au moins un distributeur de contenu (CDA"j) associé audit au moins un fournisseur de contenus.

3. Procédé selon la revendication 2, dans lequel le premier indicateur technique est un indicateur du protocole de transmission utilisé par le fournisseur de contenus pour fournir un contenu numérique, et le deuxième indicateur technique est un indicateur d'un protocole de transmission supporté par le distributeur de contenus.

4. Procédé selon la revendication 2 ou 3, dans lequel le premier indicateur technique est un indicateur d'un format de codage utilisé par le fournisseur de contenus pour encoder un contenu numérique et le deuxième indicateur technique est un indicateur d'un format de codage supporté par le distributeur de contenus.

5. Procédé selon l'une des revendications 2 à 4, dans lequel :

les premiers paramètres comprennent, pour chaque fournisseur de contenus, un indicateur de couverture de service, relatif à une zone de fourniture de service visée par ledit fournisseur de contenus ;

les deuxièmes paramètres comprennent, pour chaque distributeur de contenus, un indicateur de couverture de distribution, relatif à une zone de distribution de contenus couverte par ledit distributeur de contenus ;

la présélection (131) étant effectuée en outre en fonction de la comparaison entre lesdits indicateurs de couverture de service et lesdits indicateurs de couverture de distribution.

6. Procédé selon la revendication 2 à 5, dans lequel la sélection (133) comprend :

déterminer, pour au moins un point de présence de chaque distributeur de contenu candidat (CDA'j), un indicateur de distribution de contenu, indiquant si la présence dans ledit point de présence d'un contenu numérique fourni par ledit fournisseur de contenus permet la maximisation d'une fonction de marge de fédération ; et

sélectionner, parmi les distributeurs de contenus candidats, au moins un distributeur de contenu (CDA"j) comportant un point de présence $PoP_p$ présentant un indicateur de distribution de contenu non nul.

7. Procédé selon la revendication 6, comprenant en outre le stockage (140) d'un contenu numérique dans les points de présence des distributeurs de contenus sélectionnés présentant un indicateur de distribution de contenu non nul pour ledit contenu.

8. Procédé selon la revendication 6 ou 7, comprenant en outre :

déterminer un indicateur de distribution de charge représentant la façon dont une requête émanant d'une zone déterminée, pour un contenu numérique fourni par ledit fournisseur de contenus, soit redirigée vers un point de présence d'un distributeur de contenus candidat, en fonction de ladite fonction de marge de fédération ;

désigner (140) dans une table de routage, au moyen dudit indicateur de distribution de charge, un distributeur de contenu sélectionné vers lequel router une requête pour ledit contenu numérique émanant de ladite zone déterminée.

9. Procédé selon la revendication 8, dans lequel les indicateurs de distribution de contenu et de distribution de charge sont déterminés en maximisant la fonction de marge de fédération suivante : $f = \alpha[y_{i,l}^{p}] - \beta[x_{p}^{l}]$, où :

- $x_{p}^{l}$ est l'indicateur de distribution de contenu relatif à la présence d'un contenu $c_l$ dans le point de présence $PoP_p$ ;

- $y_{i,l}^{p}$ est l'indicateur de distribution de charge représentant la probabilité qu'une requête émanant d'une zone $Z_i$, pour un contenu $c_l$, soit redirigée vers un point de présence $PoP_p$ ;

- $\alpha$ est une matrice dont les coefficients dépendent d'au moins un critère technique parmi le débit moyen d'un contenu appartenant audit fournisseur de contenus, le nombre de sessions servies par ledit fournisseur de contenus pendant une durée déterminée, la répartition de la demande et de la popularité de contenus sur les différentes zones de l'empreinte de couverture dudit fournisseur de contenus ;

- $\beta$ est un vecteur dont les coefficients dépendent de la taille moyenne d'un contenu appartenant audit fournisseur de service.

10. Entité intermédiaire pour l'établissement d'une fédération de distribution de contenus entre une pluralité de fournisseurs de contenus (CSPm) et une pluralité de distributeurs de contenus (CDAj), ladite entité comprenant :

des moyens de mémorisation (11,12) dans lesquels sont mémorisés une pluralité de premiers paramètres fournis par lesdits fournisseurs de contenus et un pluralité de deuxièmes paramètres fournis par lesdits distributeurs de contenus ;

des moyens de traitement (20) configurés pour récupérer les paramètres mémorisés dans les moyens de mémorisation et associer au moins un desdits fournisseurs de contenus avec au moins un desdits distributeurs de contenus, en fonction desdits premiers paramètres et desdits deuxièmes paramètres, afin d'établir une fédération de distribution de contenus.

11. Système de distribution de contenus numériques comprenant une pluralité de fournisseurs de contenus (CSPm), une pluralité de distributeurs de contenus (CDAj) et une entité intermédiaire (INT) selon la revendication 10, dans lequel :

lesdits fournisseurs de contenus sont configurés pour envoyer des premiers paramètres à l'entité intermédiaire ;

lesdits distributeurs de contenus sont configurés pour envoyer des deuxièmes paramètres à l'entité intermédiaire ;

l'entité intermédiaire est configurée pour associer au moins un desdits fournisseurs de contenus avec au moins un desdits distributeurs de contenus, en fonction desdits premiers paramètres et deuxièmes paramètres reçus, afin d'établir, au sein du système, une fédération de distribution de contenus composée desdits au moins un fournisseur de contenus et au moins un distributeur de contenus associés.

12. Programme d'ordinateur comportant des instructions de code pour la mise en œuvre du procédé d'établissement d'une fédération de distribution de contenus selon l'une des revendications 1 à 9, lorsque ce programme est exécuté par un processeur.

13. Support informatique, lisible par un ordinateur ou un processeur de données, et comportant des instructions de code d'un programme d'ordinateur selon la revendication 12.


**Patentansprüche**

1. Verfahren zur Herstellung einer Gruppe zur Verteilung von Inhalten, die aus mindestens einem Inhaltsbereitsteller und mindestens einem Inhaltsverteiler innerhalb eines Systems, das eine Vielzahl von Inhaltsbereitstellern (CSPm) und eine Vielzahl von Inhaltsverteilern (CDAj) beinhaltet, besteht, wobei das Verfahren Folgendes beinhaltet; Bereitstellen (110) von ersten Parametern, durch die Inhaltsbereitsteller des Systems, an eine Zwischeneinheit (INT), die sich von den Inhaltsbereitstellern und den Inhaltsverteilern unterscheidet;

Bereitstellen (120) von zweiten Parametern, durch die Inhaltsverteiler des Systems, an die Zwischeneinheit (INT);

einen Schritt des Zuordnens (130), der durch die Zwischeneinheit (INT) umgesetzt wird, mindestens eines der Inhaltsbereitsteller des Systems zu mindestens einem der Inhaltsverteiler des Systems in Abhängigkeit von den ersten Parametern und zweiten Parametern;
Herstellen einer Gruppe zur Verteilung von Inhalten, die aus dem mindestens einen Inhaltsbereitsteller und dem mindestens einen Inhaltsverteiler, die einander zugeordnet wurden, besteht.

2. Verfahren nach Anspruch 1, wobei:

die ersten Parameter für jeden Inhaltsbereitsteller mindestens einen ersten technischen Indikator beinhalten, der sich auf eine technische Eigenschaft, die einen von dem Inhaltsbereitsteller bereitgestellten digitalen Inhalt betrifft, bezieht;
die zweiten Parameter für jeden Inhaltsverteiler mindestens einen zweiten technischen Indikator beinhalten, der sich auf die technische Fähigkeit des Inhaltsverteilers, einen digitalen Inhalt zu liefern, bezieht;
wobei das Verfahren ferner Folgendes beinhaltet:

Vorauswählen (131), für mindestens einen der Inhaltsbereitsteller, mindestens eines potentiellen Inhaltsverteilers (CDA'j) aus den Inhaltsverteilern in Abhängigkeit von einem Vergleich zwischen den ersten und den zweiten technischen Indikatoren; und
Auswählen (133), aus den vorausgewählten potentiellen Inhaltsverteilern, des mindestens einen Inhaltsverteilers (CDA"j), der dem mindestens einen Inhaltsbereitsteller zugeordnet ist.

3. Verfahren nach Anspruch 2, wobei der erste technische Indikator ein Indikator des Übertragungsprotokolls ist, das von dem Inhaltsbereitsteller verwendet wird, um einen digitalen Inhalt bereitzustellen, und der zweite technische Indikator ein Indikator eines Übertragungsprotokolls ist, das von dem Inhaltsverteiler unterstützt wird.

4. Verfahren nach Anspruch 2 oder 3, wobei der erste technische Indikator ein Indikator eines Codierungsformats ist, das von dem Inhaltsbereitsteller verwendet wird, um einen digitalen Inhalt zu codieren, und der zweite technische Indikator ein Indikator eines Codierungsformats ist, das von dem Inhaltsverteiler unterstützt wird.

5. Verfahren nach einem der Ansprüche 2 bis 4, wobei:

die ersten Parameter für jeden Inhaltsbereitsteller einen Dienstabdeckungsindikator beinhalten, der sich auf einen Dienstbereitstellungsbereich, auf den der Inhaltsbereitsteller abzielt, bezieht;
die zweiten Parameter für jeden Inhaltsverteiler einen Verteilungsabdeckungsindikator beinhalten, der sich auf einen Inhaltsverteilungsbereich, der durch den Inhaltsverteiler abgedeckt wird, bezieht;
das Vorauswählen (131) ferner in Abhängigkeit von dem Vergleich zwischen den Dienstabdeckungsindikatoren und den Verteilungsabdeckungsindikatoren durchgeführt wird.

6. Verfahren nach Anspruch 2 bis 5, wobei das Auswählen (133) Folgendes beinhaltet:

Bestimmen, für mindestens einen Knotenpunkt jedes potentiellen Inhaltsverteilers (CDA'j), eines Inhaltsverteilungsindikators, der angibt, ob das Vorhandensein, in dem Knotenpunkt, eines digitalen Inhalts, der durch den Inhaltsbereitsteller bereitgestellt wird, die Maximierung einer Gruppenmargenfunktion gestattet; und
Auswählen, aus den potentiellen Inhaltsverteilern, mindestens eines Inhaltsverteilers (CDA"j), der einen Knotenpunkt $PoP_p$ umfasst, welcher einen Inhaltsverteilungsindikator ungleich null aufweist.

7. Verfahren nach Anspruch 6, das ferner das Speichern (140) eines digitalen Inhalts in den Knotenpunkten der ausgewählten Inhaltsverteiler, die für den Inhalt einen Inhaltsverteilungsindikator ungleich null aufweisen, beinhaltet.

8. Verfahren nach Anspruch 6 oder 7, das ferner Folgendes beinhaltet:

Bestimmen eines Lastverteilungsindikators, der die Art und Weise darstellt, wie eine Anforderung nach einem durch den Inhaltsbereitsteller bereitgestellten digitalen Inhalt, die aus einem bestimmten Bereich stammt, in Abhängigkeit von der Gruppenmargenfunktion an einen Knotenpunkt eines potentiellen Inhaltsverteilers umgeleitet wird;
Benennen (140), in einer Routing-Tabelle, mittels des Lastverteilungsindikators, eines ausgewählten Inhaltsverteilers, zu dem eine Anforderung nach dem digitalen Inhalt, die aus dem bestimmten Bereich stammt, geroutet werden soll.

9. Verfahren nach Anspruch 8, wobei die Inhaltsverteilungs- und Lastverteilungsindikatoren bestimmt werden, indem die folgende Gruppenmargenfunktion maximiert wird: $f = \alpha[y_{i,l}^{p}] - \beta[x_{p}^{l}]$ , wobei:

- $x_{p}^{l}$ der Inhaltsverteilungsindikator bezogen auf das Vorhandensein eines Inhalt $c_l$ in dem Knotenpunkt PoP$_p$ ist;

- $y_{i,l}^{p}$ der Lastverteilungsindikator ist, der die Wahrscheinlichkeit, dass eine Anforderung nach einem Inhalt $c_l$, die aus einem Bereich $Z_i$ stammt, zu einem Knotenpunkt PoP$_p$ umgeleitet wird, darstellt;

- $\alpha$ eine Matrix ist, deren Koeffizienten von mindestens einem technischen Kriterium aus Folgenden abhängen: dem durchschnittlichen Durchsatz eines Inhalts, der zu dem Inhaltsbereitsteller gehört, der Anzahl von Sitzungen, die durch den Inhaltsbereitsteller während eines bestimmten Zeitraums durchgeführt werden, der Verteilung der Nachfrage und der Beliebtheit von Inhalten in den unterschiedlichen Bereichen des Abdeckungsraums des Inhaltsbereitstellers;

- $\beta$ ein Vektor ist, dessen Koeffizienten von der durchschnittlichen Größe eines Inhalts, der zu dem Dienstbereitsteller gehört, abhängen.

10. Zwischeneinheit für die Herstellung einer Gruppe zur Verteilung von Inhalten zwischen einer Vielzahl von Inhaltsbereitstellern (CSPm) und einer Vielzahl von Inhaltsverteilern (CDAj), wobei die Einheit Folgendes beinhaltet:

Speichermittel (11, 12), in denen eine Vielzahl von ersten Parametern, die durch die Inhaltsbereitsteller bereitgestellt werden, und eine Vielzahl von zweiten Parametern, die durch die Inhaltsverteiler bereitgestellt werden, gespeichert sind;
Verarbeitungsmittel (20), die dazu konfiguriert sind, die in den Speichermitteln gespeicherten Parameter abzurufen und in Abhängigkeit von den ersten Parametern und den zweiten Parametern mindestens einen der Inhaltsbereitsteller mindestens einem der Inhaltsverteiler zuzuordnen, um eine Gruppe zur Verteilung von Inhalten herzustellen.

11. System zur Verteilung von digitalen Inhalten, das eine Vielzahl von Inhaltsbereitstellern (CSPm), eine Vielzahl von Inhaltsverteilern (CDAj) und eine Zwischeneinheit (INT) nach Anspruch 10 beinhaltet, wobei:

die Inhaltsbereitsteller dazu konfiguriert sind, erste Parameter an die Zwischeneinheit zu senden;
die Inhaltsverteiler dazu konfiguriert sind, zweite Parameter an die Zwischeneinheit zu senden;
die Zwischeneinheit dazu konfiguriert ist, in Abhängigkeit von den empfangenen ersten Parametern und zweiten Parametern mindestens einen der Inhaltsbereitsteller mindestens einem der Inhaltsverteiler zuzuordnen, um innerhalb des Systems eine Gruppe zur Verteilung von Inhalten herzustellen, die aus dem mindestens einen Inhaltsbereitsteller und dem mindestens einen Inhaltsverteiler, die einander zugeordnet wurden, besteht.

12. Computerprogramm, das Codeanweisungen zur Umsetzung des Verfahrens zur Herstellung einer Gruppe von Inhaltsverteilung nach einem der Ansprüche 1 bis 9 umfasst, wenn dieses Programm von einem Prozessor ausgeführt wird.

13. Datenträger, der von einem Computer oder einem Datenprozessor gelesen werden kann und der Codeanweisungen eines Computerprogramms nach Anspruch 12 umfasst.

## Claims

1. Method for establishing a content distribution federation composed of at least one content provider and at least one content distributor, within a system comprising a plurality of content providers (CSPm) and a plurality of content distributors (CDAj), the method comprising:

the provision (110) of first parameters, by said content providers of the system, to an intermediate entity (INT) distinct from said content providers and from said content distributors;
the provision (120) of second parameters, by said content distributors of the system, to said intermediate entity (INT);
a step of association (130), implemented by said intermediate entity (INT), of at least one of said content providers of the system with at least one of said content distributors of the system based on the first parameters and second parameters;
the establishment of a content distribution federation composed of at least one content provider and at least one content distributor in association.

2. Method according to Claim 1, in which:

the first parameters comprise, for each content provider, at least one first technical indicator, in relation to a technical characteristic concerning a digital content provided by the content provider;
the second parameters comprise, for each content distributor, at least one second technical indicator, in relation to the technical capability of the content distributor to deliver a digital content;
the method further comprising the preselection (131), for at least one of said content providers, of at least one candidate content distributor (CDA'j) out of said content distributors, based on a comparison between the first and second technical indicators; and
the selection (133), from the preselected candidate content distributors, of the at least one content distributor (CDA"j) associated with said at least one content provider.

3. Method according to Claim 2, in which the first technical indicator is an indicator of the transmission protocol used by the content provider to supply a digital content, and the second technical indicator is an indicator of a transmission protocol supported by the content distributor.

4. Method according to Claim 2 or 3, in which the first technical indicator is an indicator of a coding format used by the content provider to encode a digital content and the second technical indicator is an indicator of a coding format supported by the content distributor.

5. Method according to one of Claims 2 to 4, in which:

the first parameters comprise, for each content provider, a service coverage indicator, in relation to a service provision zone targeted by said content provider;
the second parameters comprise, for each content distributor, a distribution coverage indicator, in relation to a content distribution zone covered by said content distributor;
the preselection (131) being performed also based on the comparison between said service coverage indicators and said distribution coverage indicators.

6. Method according to Claims 2 to 5, in which the selection (133) comprises:

determining, for at least one point of presence of each candidate content distributor (CDA'j), a content distribution indicator, indicating if the presence in said point of presence of a digital content supplied by said content provider allows the maximization of a federation margin function; and
selecting, from the candidate content distributors, at least one content distributor (CDA"j) comprising a point of presence $PoP_p$ having a non-zero content distribution indicator.

7. Method according to Claim 6, further comprising the storage (140) of a digital content in the points of presence of the selected content distributors having a non-zero content distribution indicator for said content.

8. Method according to Claim 6 or 7, further comprising:

determining a load distribution indicator representing the manner in which a request originating from a determined zone, for a digital content supplied by said content provider, is redirected to a point of presence of a candidate content distributor, based on said federation margin function;
designating (140) in a routing table, by means of said load distribution indicator, a selected content distributor to which to route a request for said digital content originating from said determined zone.

9. Method according to Claim 8, in which the content distribution and load distribution indicators are determined by maximizing the following federation margin function: $f = \alpha \left[ y_{i,l}^{p} \right] - \beta \left[ x_{p}^{l} \right]$, where:

- $x_{p}^{l}$ is the content distribution indicator in relation to the presence of a content $c_l$ in the point of presence $PoP_p$;

- $y_{i,l}^{p}$ is the load distribution indicator representing the probability that a request originating from a zone $Z_i$, for a content $c_l$, is redirected to a point of presence $PoP_p$;
- $\alpha$ is a matrix whose coefficients depend on at least one technical criterion out of the average bit rate of a content belonging to said content provider, the number of sessions served by said content provider over a determined duration, the distribution of the demand and of the popularity of contents over the different zones of the coverage imprint of said content provider;
- $\beta$ is a vector whose coefficients depend on the average size of a content belonging to said service provider.

**10.** Intermediate entity for establishing a content distribution federation between a plurality of content providers (CSPm) and a plurality of content distributors (CDAj), said entity comprising:

storage means (11, 12) in which are stored a plurality of first parameters supplied by said content providers and a plurality of second parameters supplied by said content distributors;
processing means (20) configured to recover the parameters stored in the storage means and associate at least one of said content providers with at least one of said content distributors, based on said first parameters and said second parameters, in order to establish a content distribution federation.

**11.** Digital content distribution system comprising a plurality of content providers (CSPm), a plurality of content distributors (CDAj) and an intermediate entity (INT) according to Claim 10, in which:

said content providers are configured to send first parameters to the intermediate entity;
said content distributors are configured to send second parameters to the intermediate entity;
the intermediate entity is configured to associate at least one of said content providers with at least one of said content distributors, based on said first parameters and second parameters received, in order to establish, within the system, a content distribution federation composed of said at least one content provider and at least one content distributor in association.

**12.** Computer program comprising code instructions for the implementation of the method for establishing a federation of content distribution according to one of Claims 1 to 9, when this program is executed by a processor.

**13.** Storage medium, that can be read by a computer or a data processor, and comprising code instructions of a computer program according to Claim 12.

Fig. 1

Fig. 2

$$CDAj \xrightarrow{param} INT \qquad 110$$

$$CSPm \xrightarrow{param} INT \qquad 120$$

$$131 \quad \{CSPm\} : \{CDAj\} \xrightarrow{param} \{CDA'j\}$$

$$130$$

$$133 \quad \{CSPm\} : \{CDA'j\} \xrightarrow{f} \{CDA''j\}$$

$$\{CSPm\} \xrightarrow[\{x_l^p\}]{c_l} PoP_p \qquad 140$$

$$\{y_{i,l}^p\} \xrightarrow{\hspace{3cm}} TAB \qquad 150$$

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8117276 B